# EUROPÄISCHE PATENTSCHRIFT

(11) **EP 1 447 276 B1**
(45) Veröffentlichungstag und Bekanntmachung des Hinweises auf die Patenterteilung: **14.06.2006**
(21) Anmeldenummer: 04001303.9
(22) Anmeldetag: 22.01.2004
(51) Int. Cl.: B60R 5/04, B60R 21/06, B60J 1/20, E06B 9/44, B60J 11/00

(54) **Wickelwellenanordnung für Fahrzeuge zum Aufwickeln einer Werkstoffbahn**
Winding shaft arrangement for vehicles for winding a material web
Dispositif d'arbre d'enroulement pour véhicules pour enrouler une bande de matériau

(30) Priorität: 11.02.2003 DE 10305750
(43) Veröffentlichungstag der Anmeldung: 18.08.2004
(73) Patentinhaber: BOS GmbH & Co. KG, 73760 Ostfildern (DE)
(72) Erfinder: Sitzler, Wolfgang, 42111 Wuppertal (DE); Slawik, Peter, 40764 Langenfeld (DE)
(74) Vertreter: Patentanwälte Ruff, Wilhelm, Beier, Dauster & Partner

(56) Entgegenhaltungen:
- EP-A- 0 646 687
- AU-A- 6 522 674
- DE-A1- 2 617 279
- DE-A1- 3 231 091
- DE-A1- 3 941 877
- DE-C1- 19 832 360

## Beschreibung

Die Erfindung betrifft eine Wickelwellenanordnung für Fahrzeuge entsprechend dem Oberbegriff des Anspruchs 1. Die Merkmale des Oberbegriffs sind aus der AU 65 226 74 A bekannt. Eine weitere Wickel wellen anordnung ist aus der DE 29 41 711 C2 bekannt Dort bildet die Wickelwelle ein Rohrprofil, welches üblicherweise aus einem flachen Stahlblechstreifen nach Durchlaufen mehrerer Profilrollen enthaltender Walzgerüste durch Kaltwalzen geformt wird. Dabei kann so verfahren werden, dass zunächst ein Schlitzrohr gewalzt wird, bei welchem die beiden Längsrandbereiche des bereits im wesentlichen ein Kreisprofil aufweisenden verformten Stahlblechstreifens hakenleistenartig ausgebildet sind. Sodann kann das Schlitzrohr auf die gewünschte Fixlänge abgelängt werden. Anschließend werden die ineinandergehakten, formschlüssig ineinandergreifenden hakenleistenartigen Längsrandbereiche zur Fertigstellung der Wickelwelle miteinander verpresst. Dies kann mit Hilfe zweier länglicher Pressbacken geschehen, von denen eine unterhalb der beiden formschlüssig ineinandergreifenden Längsrandbereiche als Widerlager im Rohrinnenraum angeordnet ist, während die andere längliche Pressbacke von außen zugestellt wird. Anstelle eines Blechstreifens aus Stahl kann auch ein Blechstreifen aus einem anderen kaltwalzfähigen Metall, z.B. aus Aluminium, verwandt werden.

Gemäß der DE 29 41 711 C2 wird zudem während des Kaltwalzvorganges, den beiden Längsrandbereichen diametral gegenüberliegend, eine radial nach innen in das bekannte Rohrprofil eingeformte Längsausnehmung in Form einer Ω-förmig hinterschnittenen Längsnut hergestellt.

Diese Ω-förmig hinterschnittene Längsnut bildet eine sich axial entlang einer Mantellinie der Wickelwelle erstreckende Kedernut, in welche der der Wickelwelle zugewandte, eine Kederschnur enthaltende Querrandstreifen einer Werkstoffbahn von der Stirnseite der Wickelwelle her axial eingeschoben wird. Zuvor wird die Kedernut in dem schlaufenförmig umgelegten Querrandstreifen mittels einer Fadennaht oder mittels einer Schweißnaht befestigt. Als Werkstoffbahnen können je nach Verwendungszweck wickelfähige, insbesondere biegeschlaffe Bahnen textiler oder folienartiger Struktur, eingesetzt werden. So können für Laderaumabdeckungen Rollotuche, für vertikale Trennvorrichtungen Netze und für Lichtschutzvorrichtungen durchscheinende Gewirke verwandt werden.

Die vorbeschriebenen Vorarbeiten gemäß der DE 29 41 711 C2 bedeuten einen relativ großen Herstellungsaufwand. Auch muss der die Kederschnur enthaltende Querrandstreifen der Werkstoffbahn relativ umständlich von Hand in die Ω-förmig hinterschnittene Kedernut der Wickelwelle eingeschoben werden, was anhand von Fig. 3 der DE 29 41 711 C2 ohne weiteres nachzuvollziehen ist.

Die mit der vorbeschriebenen Wickelwellenanordnung gemäß der DE 29 41 711 C2 einhergehende Problematik, nämlich die bekannte Wickelwellenanordnung so umzugestalten, dass diese hinsichtlich der Anbringung der Werkstoffbahn einen wesentlich geringeren Aufwand als bisher erfordert, wurde entsprechend der älteren nicht vorveröffentlichten DE 101 63 699 C1 zunächst dadurch gelöst, dass der Querrandstreifen der Werkstoffbahn unmittelbar in die Längsausnehmung eingelegt und in letzterer nach Zusammenpressen von Rohrprofilwandbereichen durch Klemmschluß gehalten ist.

Während gemäß der DE 29 41 711 C2 der Querrandstreifen zusätzliche Mittel, nämlich eine Kederanordnung erfordert, benötigt entsprechend der DE 101 63 699 C1 der Querrandstreifen keine gesonderten Mittel, sondern er kann unmittelbar, d.h. kederlos, tangential oder sekantial in die Längsausnehmung eingelegt werden, während die Kederanordnung gemäß der DE 29 41 711 C2 in sehr umständlicher Weise von der Stirnseite der Wickelwelle her in die Ω-förmig hinterschnittene Längsnut eingeschoben werden muss. Der Querrandstreifen der Werkstoffbahn entsprechend der DE 101 63 699 C1 kann im übrigen ohne weitere Zusatzarbeiten so in die Längsausnehmung eingelegt werden, wie er nach dem Schneiden der Werkstoffbahn vorliegt. Der in die Längsausnehmung eingelegte Querrandstreifen der Werkstoffbahn wird in der Längsausnehmung durch Klemmschluß gehalten, indem die die Längsausnehmung begrenzenden bzw. benachbarten Rohrprofilwandbereiche zusammengepresst, und dabei plastisch verformt werden.

Eine Ausführungsform entsprechend der DE 101 63 699 C1 besteht darin, dass die Längsausnehmung im Umfangsabstand von den beiden formschlüssig ineinandergreifenden Randbereichen etwa radial nach innen eingeformt ist und die die Längsausnehmung begrenzenden Rohrwandbereiche nach Einlegen des Querrandstreifens mit diesem verpresst sind. Zweckmäßig kann hierzu auch die von der DE 29 41 711 C2 her bekannte Ω-förmig hinterschnitten eingeformte Längsnut verwendet werden.

Ein erfindungswesentlicher Vorteil entsprechend der DE 101 63 699 C1 besteht darin, den wie auch immer ausgebildeten und beschaffenen Querrandstreifen der Werkstoffbahn in bequemer Weise etwa tangential oder sekantial von außen in eine Längsnut einzulegen und anschließend einen die Werkstoffbahn fest mit der Wickelwelle verbindenden Klemmschluss bzw. eine Klemmfügung zwischen dem Querrandstreifen und den die Längsausnehmung begrenzenden Profilwandbereichen herzustellen.

Auch schlägt die Erfindung vor, ein auf gesamter Umfangslänge der Profilwand durch Stoffschluss zusammengehaltenes Rohrprofil zu verwenden, welches beispielsweise aus einem nahtlos gezogenen Metallrohr, insbesondere Stahlrohr, oder auch aus einem Metall-Stranggussprofil, insbesondere Leichtmetall-Stranggussprofil, bestehen kann. Letzteres ist an sich vorbekannt durch die DE 198 32 360 C1 (s. Sp. 3 Z. 30-35). Wichtig ist, dass die für die Aufnahme des Querrandstreifens vorgesehene Längsausnehmung bereits während der Rohrbildung mitgeformt wird. Nach der Rohrbildung können die Rohre beispielsweise auf eine der geforderten Wickelwellenlänge entsprechende Länge abgelängt, der Querrandstreifen eingelegt und anschließend mittels zweier Pressbacken innerhalb der Längsausnehmung verklemmt werden, indem die die Längsausnehmung begrenzenden Profilwandbereiche durch die beiden Pressbacken gegeneinander verpresst werden.

Während der Rohrbildung oder anschließend kann es entsprechend einer weiteren Ausbildung der Erfindung zweckmäßig sein, dass die Längsausnehmung des Rohrprofils dem Querrandstreifen der Werkstoffbahn zugewandte, in den Querrandstreifen eindringende Formschlussmittel, wie Vorsprünge, Axialrinnen, Spitzen od.dgl., und/oder zusätzlich einer Vorfixierung des Querrandstreifens vor dessen Verklemmung dienende Haft- oder Klebemittel aufweist.

Obwohl entsprechend der DE 101 63 699 C1 ein bedeutender Vorteil darin gesehen wird, aus Gründen einer baulich einfacheren Ausführungsform keinen Keder zur Befestigung der Werkstoffbahn innerhalb der Längsausnehmung zu verwenden, greift die vorliegende Erfindung dieses Merkmal wieder auf. Und zwar im Zusammenhang mit dem wesentlichen Kern des Gegenstandes gemäß der DE 101 63 699 C1, der darin besteht, dass Mittel verklemmt werden, welche die Werkstoffbahn und die Wickelwelle fest miteinander verbindenden. Diesem wesentlichen Gesichtspunkt entspricht eine erfindungsgemäße Ausführungsform, bei welcher der Querrandstreifen der Werkstoffbahn als etwa wulstartiger Kederstreifen ausgebildet ist, welcher in die Längsausnehmung eingelegt und dort durch Klemmschluss gehalten ist.

Insbesondere sieht die Erfindung in diesem Zusammenhang vor, dass der Kederstreifen durch die in der äußeren Mantelfläche des Rohrprofils angeordnete Längsöffnung hindurch der Längsausnehmung einlegbar ist, worauf anschließend die Verklemmung erfolgt.

Besonders zweckmäßig sind in diesem Zusammenhang entsprechend der Erfindung folgende Merkmale, wonach der Kederstreifen ein bezüglich der Werkstoffbahn zunächst separates Bauteil bildet, welches nach Aufnahme in der Längsausnehmung mit dem Querrandstreifen der Werkstoffbahn verbunden, insbesondere verschweißt ist. Im einzelnen kann man entsprechend der Erfindung beispielsweise derart vorgehen, dass der separate Kederstreifen bereits während der bildsamen Formgebung des Rohrprofils, insbesondere der Längsausnehmung, gewissermaßen in statu nascendi der Längsausnehmung in letztere eingelegt und letztere sodann im Zuge der weiteren bildsamen Formgebung in der hinterschnittenen Längsausnehmung eingeschlossen und dort sogieich oder anschließend verklemmt wird.

Eine Verbindung des Kederstreifens mit der Werkstoffbahn kann derart erfolgen, dass man deren freien Querrand der Werkstoffbahn auf eine nach außen weisende Fügefläche des in der Längsausnehmung verklemmenden Kederstreifens auflegt und dort mit zweckmäßigen Mitteln eine Schweiß- oder Klebefügung herstellt.

Auch im Zusammenhang mit der vorliegenden Erfindung kann es schließlich zweckmäßig sein, die von der DE 198 32 360 C1 an sich bekannten Merkmale (s. dort Sp. 3 Z. 68, Sp. 4 Z. 1-4) angepasst anzuwenden, um ein glattflächiges Aufwickeln der Werkstoffbahn unter Vermeidung einer Höckerbildung zu gewährleisten. Diese Merkmale sind dadurch gekennzeichnet, dass nach der Klemmfügung zwischen Querrandstreifen und den Rohrprofil-Wandbereichen der Längsausnehmung deren die Längsöffnung begrenzenden beiden Randbereiche etwa um die Dicke der Werkstoffbahn radial zueinander versetzt sind.

In den Zeichnungen ist ein bevorzugtes Ausführungsbeispiel entsprechend der Erfindung näher dargestellt, es zeigt,
Fig. 1 einen vergrößerten Radialschnitt durch ein längsnahtgeschweißtes Rohr aus Stahlblech mit einem in einer radial nach außen offenen, Ω-förmig hinterschnittenen, Längsausnehmung eingelegten Querrandschreifen einer Werkstoffbahn und
Fig. 2 einen sich an die Anordnung gemäß Fig. 1 anschließenden Fertigungsschritt, gemäß welchem die aus Fig. 1 ersichtlichen, die Ω-förmig hinterschnittene Längsausnehmung begrenzenden Rohrprofil-Wandbereiche gemeinsam mit dem in die Ω-förmig hinterschnittene Längsausnehmung eingelegten Querrandstreifen der Werkstoffbahn verpresst sind.

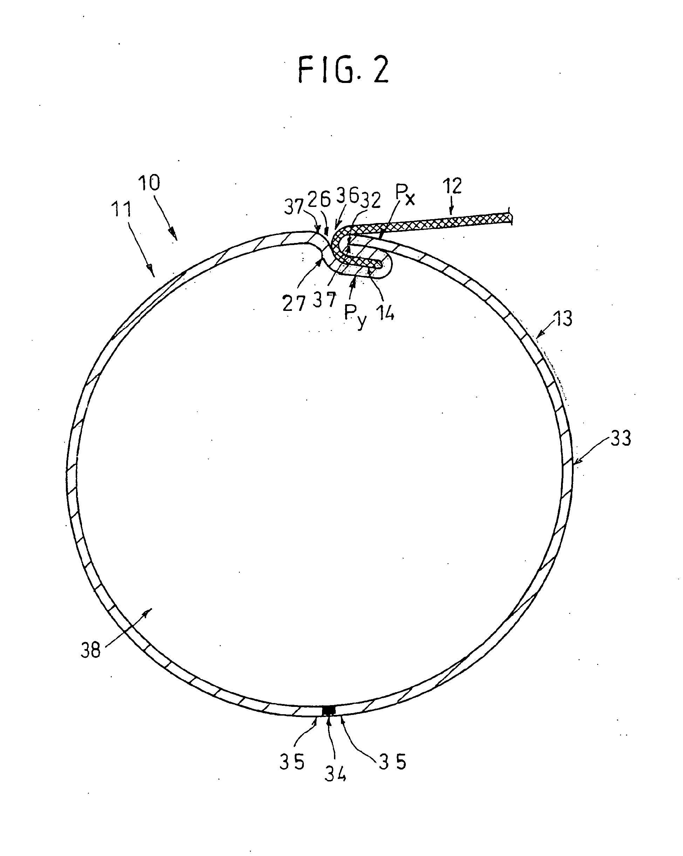

Bei dem in Fig. 2 dargestellten Querschnitt durch eine Wickelwellenanordnung 10 sind viele übliche bekannte Bauteile, so z.B. ein Gehäuse, ein Federmotorantrieb, Lagerbauteile etc., weggelassen.

Die Wickelwellenanordnung 10 gemäß Fig. 2 zeigt eine Wickelwelle 11, welche aus einem im wesentlichen kreisförmigen Rohrprofil 13 besteht, mit welchem ein Querrandstreifen 14 des inneren Randes einer nur teilweise gezeigten Werkstoffbahn 12 verklemmt ist. Das Rohrprofil 13 zeigt den Querschnitt durch ein eine Längsschweißnaht 34 aufweisendes, den Umfang der Profilwand 33 zusammenhaltendes, Stahlrohr.

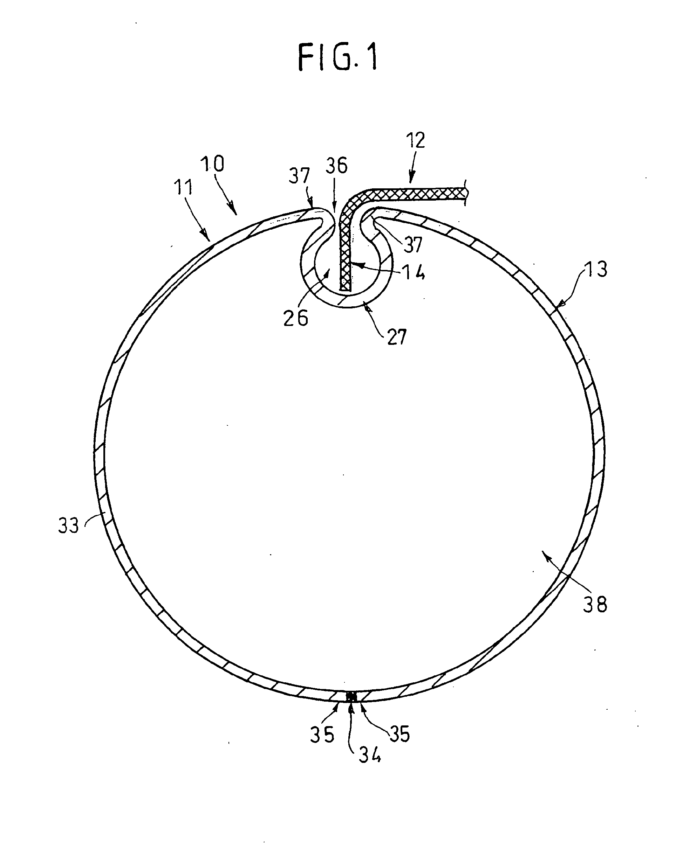

Die der Anordnung gemäß Fig. 2 vorausgehende Fertigungsstufe zeigt gemäß Fig. 1 das im wesentlichen kreisförmige Rohrprofil 13. Das Stahlrohr ist durch Kaltwalzverformung in mehrere Profilrollen aufweisenden Walzgerüsten aus einem flachen Stahlblechstreifen zunächst als Schlitzrohr entstanden, dessen gegenüberliegende Randbereiche 35 mittels der Längsschweißnaht 34 stoffschlüssig miteinander verbunden sind.

In den Fig. 1 und 2 ist zudem eine während der bildsamen Formung des Rohrprofils 13 Ω-förmig hinterschnitten eingeformte Längsausnehmung bzw. Längsnut 26 eingetragen. Die Ω-förmig hinterschnittene Längsnut 26 ragt mit dem sie begrenzenden Rohrprofilwandbereich 27 etwa radial in den Profilhohlraum 38 des Rohrprofils 13 hinein. Die mit der Außenmantelfläche des Rohrprofils 13 bündige Längsöffnung der Längsausnehmung bzw. Längsnut 26 ist mit 36 bezeichnet. Die beiden die Längsöffnung 36 begrenzenden Randbereiche der Profilwand 33 tragen die Bezugsziffern 37.

Der Querrandstreifen 14 wird gemäß Fig. 1 in die Ω-förmig hinterschnittene Längsnut 26 radial eingeführt, worauf durch Verpressen des die Längsnut 26 begrenzenden Rohrprofil-Wandbereichs 27 ein fester Klemmschluß gemeinsam mit dem Querrandstreifen 14 der Werkstoffbahn 12 erzielt wird.

Hierbei erfolgt eine Verpressung des Rohrprofil-Wandbereichs 27 unter Einbeziehung des Querrandstreifens 14 etwa entlang der beiden hauptsächlichen Druckrichtungen PX und PY, so dass sich bei plastischer Verformung des Rohrprofil-Wandbereichs 27, verbunden mit einem Einquetschen des Querrandstreifens 14, ein fester Klemmschluß bzw. ein fester Klemmverbund ergibt.

Hierbei ist es auch vorteilhaft, dass die Werkstoffbahn 12 im Übergangsbereich zur Längsnut 26 um einen haarnadelbogenartig verformten Bereich 32 des die Längsnut 26 begrenzenden Rohrprofilwandbereichs 27 bogenförmig herumgeführt ist, wodurch der Umschlingungswinkel, und damit die Befestigung der Werkstoffbahn 12 in der Wickelwelle 11, verbessert wird.

## Patentansprüche

1. Wickelwellenanordnung (10) für Fahrzeuge, mit einer Wickelwelle (11) zum Aufwickeln einer Werkstoffbahn (12), wie einer Laderaumabdeckvorrichtung, einer Trennetzvorrichtung oder einer Lichtschutzvorrichtung wobei die Wickelwelle (11) ein aus Metall verformtes Rohrprofil (13) bildet, das auf der gesamten Umfangsleinge seiner Profil wanil (33) durch Stoffs schluss zusammen gehalten wird, wobei eine die Profilwand (33) in Umfangsrichtung des Rohrprofils (13) zusammenhaltende Stoffschlussverbindung vorhanden ist und wobei das Rohrprofil (13) in seiner Profilwand (33) mindestens eine Längsausnehmung (26) aufweist, **dadurch gekennzeichnet, dass** ein der Wickelwelle (11) zugewandter Querrandstreifen (14) der Werkstoffbahn (12) in die als Längsnut ausgebildete Längsausnehmung (26) eingelegt und in letzterer nach Zusammenpressen von Rohrprofilwandbereichen (27, 32) durch Klemmschluss gehalten ist.

2. Wickelwellenanordnung nach Anspruch 1, **dadurch gekennzeichnet, dass** die Stoffschlussverbindung von einer Längsschweißnaht (34) gebildet ist.

3. Wickelwellenanordnung nach Anspruch 1, d**adurch gekennzeichnet, dass** das Rohrprofil (13) von einem nahtlos gezogenen Metallrohr, insbesondere Stahlrohr, gebildet ist.

4. Wickelwellenanordnung nach Anspruch 1, **dadurch gekennzeichnet, dass** das Rohrprofil (13) von einem Metall-Stranggußprofil, insbesondere Leichtmetall-Strangrohrgußprofil, gebildet ist.

5. Wickelwellenanordnung nach einem der Ansprüche 1 bis 4, **dadurch gekennzeichnet, dass** die Längsausnehmung (26) des Rohrprofils (13) dem Querrandstreifen (14) der Werkstoffbahn (12) zugewandte, in den Querrandstreifen (14) eindringende Formschlussmittel, wie Vorsprünge, Axialrinnen, oder Spitzen, und/oder zusätzlich einer Vorfixierung des Querrandstreifens (14) vor dessen Verklemmung dienende Kraft- oder Klebemittel aufweist.

6. Wickelwellenanordnung nach einem der Ansprüche 1 bis, 5 **dadurch gekennzeichnet, dass** die Längsausnehmung (26) einen hinterschnittenen Querschnitt aufweist, der im unverformten Zustand der die Längsausnehmung (26) begrenzenden Profilwandbereiche (27) Ω- oder trapezförmig hinterschnitten ausgebildet ist.

7. Wickelwellenanordnung nach einem der Ansprüche 1 bis 6, **dadurch gekennzeichnet, dass** der Querrandstreifen (14) der Werkstoffbahn (12) als etwa wulstartiger Kederstreifen ausgebildet ist, welcher in die Längsausnehmung (26) eingelegt und dort durch Klemmschluss gehalten ist.

8. Wickelwellenanordnung nach Anspruch 7, **dadurch gekennzeichnet, dass** der Kederstreifen vor dem zusammenpressen der Rohrprofilwandbereiche durch die in der äußeren Mantelfläche des Rohrprofils (13) angeordnete Längsöffnung (36) hindurch der Längsausnehmung (26) einlegbar ist.

9. Wickelwellenanordnung nach Anspruch 7 oder nach Anspruch 8, **dadurch gekennzeichnet, dass** der Kederstreifen ein hinterschnittenes Querschnittsprofil aufweist und durch eine hinterschnittene Ausbildung der Längsausnehmung (26) zusätzlich formschlüssig gehalten ist

10. Wickelwellenanordnung nach einem der Ansprüche 7 bis 9 **dadurch gekennzeichnet, dass** der Kederstreifen ein bezüglich der Werkstoffbahn (12) zunächst separates Bauteil bildet, welches nach Aufnahme in der Längsausnehmung (26) mit dem Querrandstreifen (14) der Werkstoffbahn (12) verbunden, insbesondere verschweißt, ist.

11. Wickelwellenanordnung nach einem der Ansprüche 1 bis 10 **dadurch gekennzeichnet, dass** nach der Klemmfügung zwischen Querrandstreifen (14) und den Rohrprofil-Wandbereichen (27) der Längsausnehmung (26) deren die Längsöffnung (36) begrenzenden beiden Randbereiche (37) etwa um die Dicke der Werkstoffbahn (12) radial zueinander versetzt sind.

## Claims

1. Winding shaft arrangement (10) for vehicles, having a winding shaft (11) for rolling up a fabric web (12), such as a storage space covering device, a partition net device or a light protection device, the winding shaft (11) forming a tubular profile (13) which is formed from metal and which is held together over the entire peripheral length of the profile wall (33) thereof by means of material closure, a material closure connection being provided which holds the profile wall (33) together in the peripheral direction of the tubular profile (13), and the tubular profile (13) having at least one longitudinal recess (26) in the profile wall (33) thereof, **characterised in that** a transverse edge strip (14) of the fabric web (12) facing the winding shaft (11) is positioned in the longitudinal recess (26) which is constructed as a longitudinal groove and is retained therein by means of clamping closure after tubular profile wall regions (27, 32) have been pressed together.

2. Winding shaft arrangement according to claim 1, **characterised in that** the material closure connection is formed by a longitudinal weld seam (34).

3. Winding shaft arrangement according to claim 1, **characterised in that** the tubular profile (13) is formed from a metal tube, in particular a steel tube, which is drawn in a seamless manner.

4. Winding shaft arrangement according to claim 1, **characterised in that** the tubular profile (13) is formed from a continuously cast metal profile, in particular a continuously cast light metal tubular profile.

5. Winding shaft arrangement according to any one of claims 1 to 4, **characterised in that** the longitudinal recess (26) of the tubular profile (13) has positive-locking means, such as projections, axial grooves or points, which are directed towards the transverse edge strip (14) of the fabric web (12) and which extend into the transverse edge strip (14), and/or additionally has force or adhesive-bonding means which serve to pre-fix the transverse edge strip (14) before it is clamped.

6. Winding shaft arrangement according to any one of claims 1 to 5, **characterised in that** the longitudinal recess (26) has an undercut cross-section which is constructed so as to be undercut in an Ω-like or trapezoidal manner when the profile wall regions (27) delimiting the longitudinal recess (26) are in the unformed state.

7. Winding shaft arrangement according to any one of claims 1 to 6, **characterised in that** the transverse edge strip (14) of the fabric web (12) is constructed in the form of a substantially bead-like sealing strip which is positioned in the longitudinal recess (26) and is retained at that location by means of clamping closure.

8. Winding shaft arrangement according to claim 7, **characterised in that** the sealing strip, before the tubular profile wall regions are pressed together, can be positioned in the longitudinal recess (26) through the longitudinal opening (36) which is arranged in the outer covering face of the tubular profile (13).

9. Winding shaft arrangement according to claim 7 or claim 8, **characterised in that** the sealing strip has an undercut cross-section profile and is further retained in a positive-locking manner by means of an undercut construction of the longitudinal recess (26).

10. Winding shaft arrangement according to any one of claims 7 to 9, **characterised in that** the sealing strip forms a component which is first separate from the fabric web (12) and which, after being received in the longitudinal recess (26), is connected, in particular welded, to the transverse edge strip (14) of the fabric web (12).

11. Winding shaft arrangement according to any one of claims 1 to 10, **characterised in that**, after the transverse edge strip (14) and the tubular profile wall regions (27) of the longitudinal recess (26) have been joined together by means of clamping, the two edge regions (37) thereof delimiting the longitudinal opening (36) are radially offset relative to each other by approximately the thickness of the fabric web (12).

## Revendications

1. Dispositif d'arbre d'enroulement (10) pour véhicules, avec un arbre d'enroulement (11) pour l'enroulement d'une bande de matériau (12), comme un dispositif de couverture d'un compartiment à marchandises, un dispositif de filet de séparation ou un dispositif de protection contre la lumière, dans lequel l'arbre d'enroulement (11) forme un profilé tubulaire déformé en métal (13), qui est maintenu par complémentarité de matière sur toute la longueur périphérique de sa paroi de profilé (33), dans lequel est prévu un assemblage par complémentarité de matière maintenant la paroi de profilé (33) dans la direction périphérique du profilé tubulaire (13) et dans lequel le profilé tubulaire (13) présente au moins un évidement longitudinal (26) dans sa paroi de profilé (33), **caractérisé en ce qu'**une bande de bord transversal (14), tournée vers l'arbre d'enroulement (11), de la bande de matériau (12) est insérée dans l'évidement longitudinal (26) qui a la forme d'une rainure longitudinale et est maintenue dans ce dernier par pinçage après écrasement de zones (27, 32) de la paroi du profilé tubulaire.

2. Dispositif d'arbre d'enroulement selon la revendication 1, **caractérisé en ce que** l'assemblage par complémentarité de matière est formé par un cordon de soudure longitudinal (34).

3. Dispositif d'arbre d'enroulement selon la revendication 1, **caractérisé en ce que** le profilé tubulaire (13) est formé par un tube métallique étiré sans soudure, en particulier un tube d'acier.

4. Dispositif d'arbre d'enroulement selon la revendication 1, **caractérisé en ce que** le profilé tubulaire (13) est formé par un profilé métallique par coulée continue, en particulier un profilé tubulaire extrudé en métal léger.

5. Dispositif d'arbre d'enroulement selon l'une quelconque des revendications 1 à 4, **caractérisé en ce que** l'évidement longitudinal (26) du profilé tubulaire (13) présente des moyens d'assemblage par complémentarité de forme tournés vers la bande de bord transversal (14) de la bande de matériau (12) et pénétrant dans la bande de bord transversal (14), comme des saillies, des rainures axiales ou des pointes, et/ou des moyens de serrage ou de collage servant pour la fixation préalable de la bande de bord transversal (14) avant son pinçage.

6. Dispositif d'arbre d'enroulement selon l'une quelconque des revendications 1 à 5, **caractérisé en ce que** l'évidement longitudinal (26) présente une section transversale en contre-dépouille, qui à l'état non déformé des zones (27) de la paroi du profilé délimitant l'évidement longitudinal (26) présente une contre-dépouille en forme de Ω ou de trapèze.

7. Dispositif d'arbre d'enroulement selon l'une quelconque des revendications 1 à 6, **caractérisé en ce que** la bande de bord transversal (14) de la bande de matériau (12) est réalisée sous la forme d'une bande formant sensiblement un bourrelet, qui est insérée dans l'évidement longitudinal (26) et y est maintenue par pinçage.

8. Dispositif d'arbre d'enroulement selon la revendication 7, **caractérisé en ce que** la bande formant un bourrelet peut être insérée, avant l'écrasement des zones de la paroi du profilé tubulaire, à travers l'évidement longitudinal (26) par l'ouverture longitudinale (36) disposée dans la surface latérale extérieure du profilé tubulaire (13).

9. Dispositif d'arbre d'enroulement selon la revendication 7 ou la revendication 8, **caractérisé en ce que** la bande formant un bourrelet présente une section transversale en contre-dépouille et est en outre maintenue par complémentarité de forme par une configuration en contre-dépouille de l'évidement longitudinal (26) .

10. Dispositif d'arbre d'enroulement selon l'une quelconque des revendications 7 à 9, **caractérisé en ce que** la bande formant un bourrelet forme d'abord, par rapport à la bande de matériau (12), une pièce séparée qui, après placement dans l'évidement longitudinal (26), est assemblée, en particulier soudée, à la bande de bord transversal (14) de la bande de matériau (12).

11. Dispositif d'arbre d'enroulement selon l'une quelconque des revendications 1 à 10, **caractérisé en ce que**, après la jonction par pinçage entre la bande de bord transversal (14) et les zones (27) de la paroi du profilé tubulaire de l'évidement longitudinal (26), les deux zones de bord (37) de ce dernier délimitant l'ouverture longitudinale (36), sont décalées radialement de l'épaisseur de la bande de matériau (12) l'une par rapport à l'autre.
